# EUROPÄISCHE PATENTSCHRIFT

(11) **EP 2 801 527 B1**
(45) Veröffentlichungstag und Bekanntmachung des Hinweises auf die Patenterteilung: **06.04.2016**
(21) Anmeldenummer: 14075028.2
(22) Anmeldetag: 07.05.2014
(51) Int. Cl.: B64D 17/02, B64C 31/036, B64D 17/18

(54) **Sprunggleitschirm**
Paragliding chute
Parapente

(43) Veröffentlichungstag der Anmeldung: 12.11.2014
(73) Patentinhaber: Spekon Sächsische Spezialkonfektion GmbH, 02782 Seifhennersdorf (DE)
(72) Erfinder: Koser, Thomas, 72218 Wildberg (DE)
(74) Vertreter: Seltmann, Reinhard

(56) Entgegenhaltungen:
- FR-A1- 2 722 471
- US-A1- 2003 183 724

## Beschreibung

Die Erfindung betrifft die Ausgestaltung eines Gleitschirmes, wie er von Springern aus der Luft zum Überwinden größerer Strecken im Gleitflug über Land verwendet wird und der aus Ober- und Untersegel bestehend ausgeführt ist, in seitlicher Ansicht das Profil eines Flugzeugflügels besitzt und in Gleitrichtung ausgerichtete durch Stege abgeteilte in Gleitrichtung offene und entgegen der Gleitrichtung geschlossen ausgeführte Kammern ausgebildet sind. Im weiteren wird im konkreten Fall dafür der Begriff Sprunggleitschirm gewählt.

In der Regel weist ein flugtüchtiger Gleitschirm eine segelartige Tragfläche auf, die aus einem Obersegel und beabstandet dazu aus einem Untersegel im wesentlichen gleicher Größe besteht. Beide sind durch Stege auf Distanz gehalten angeordnet, sodass Kammern entstehen, die an der der Gleitrichtung entgegengesetzten Seite geschlossen sind und in denen sich in der Regel die Luft staut, um den entstehenden Staudruck nutzen zu können. Für Ober- und Untersegel wird ein flexibles leichtes hochfestes Material verwendet. Bezogen auf die seitliche Ansicht muss ein Querschnittsbild erreicht werden, dass dem Querschnitt eines Flugzeugflügels zum Erreichen einer optimalen Gleitfähigkeit möglichst nahe kommt.

Bei allen Konstruktionen dieser Art ist das grundsätzliche Problem vorhanden, dass die gesamte Konstruktion auf der einen Seite von möglichst geringem Gewicht sein soll, andererseits aber hochfest und, was das Kraftflußbild betrifft, möglichst stabil ausgeführt sein muß. Um diesen Forderungen gerecht zu werden, wird nach EP 1 566 336 B1, welche den nächstliegenden Stand der Technik darstellt, vorgeschlagen, die Kammern so auszuführen, dass zunächst die beiden Stege einer Kammer zusätzlich durch ein unter dem Obersegel liegendes Querband miteinander verbunden sind, in den Befestigungspunkten dieses Querbandes nach jeder Seite hin in der nächsten Kammer liegend eine Diagonalstrebe kraftschlüssig angreifend ausgebildet ist, die über die projizierte Linie des unteren Segels hinausreichend ausgeführt ist und nach Erreichen eines Befestigungspunktes für ein Tragseil des weiteren die Diagonalstrebe spiegelbildlich wieder wie beschrieben zurückgeführt wird bis zum Erreichen des nach vier Kammern folgenden weiteren Querbandes.

Weitverbreitet ist auch, wie in CZ 285 165 B6 beschrieben, dass bezogen auf die Frontansicht in jeder zweiten Kammer eine Diagonalstrebe ausgebildet ist, wobei diese paarweise so sortiert sind, dass zunächst eine Diagonalstrebe aus einer unteren Ecke der jeweiligen Kammer nach der gegenüberliegenden oberen Ecke führt, sich eine freie Kammer anschließt und in der auf die freie Kammer folgenden Kammer wieder eine Diagonalstrebe aus der sich an die freie Kammer anschließenden oberen Ecke nach der gegenüberliegenden unteren Ecke führend vorhanden ist. Anschließend folgt wieder eine freie Kammer, der wiederum eine Kammer folgt, in der sich das bereits beschriebene über die gesamte Breite des Gleitschirmes fortsetzt. An dem Ende der Diagonalstrebe, die am Untersegel endet, befindet sich jeweils ein Befestigungspunkt für ein Tragseil.

Mit den beschriebenen Konstruktionen sind bei einer Horizontalverschiebung von Obersegel zum Untersegel stets freie Kammerräume gegeben.

Beiden beschriebenen Gleitschirmkonstruktionen ist gemeinsam, dass bezogen auf einen Absprungpunkt, eine Vergrößerung der Absprungweite gegeben ist. Diese ist jedoch selbst für einen Sprung bei ruhigem Wetter stets relativ gering.

In der Schrift WO2009/043823 A1 ist ein Gleitschirm mit Doppelstauprofil mit durch Netz überspannter Nase beansprucht. Dieser Schirm entfaltet sich beim Einsatz als Sprungschirm durch die höhere Luftgeschwindigkeit nicht selbst. Die Nase würde kollabieren, und es würde sich kein Flügel ausbilden. Die Diagonalverspannungen gehen nur von Kammerwand zu Kammerwand. Demzufolge ist eine erhebliche Anzahl von Tragseilen erforderlich, die miteinander kollidieren können.

In US 2003/183724 A1 ist ein Sprungfallschirm beschrieben, bei dem Diagonalstreben in jeder Kammer von Kammerwand zu Kammerwand oder mit jeweils einer Kammer Zwischenraum ausgeführt sind, sodass zwischen zwei mit jeweils gegenläufig verlaufenden Diagonalstreben versehenen Kammern folgend jeweils eine ohne Diagonalstrebe vorhanden ist. Vorzugsweise sind die Diagonalstreben durch Bänder realisiert. Diese vibrieren im Luftstrom. Diese Erscheinung beeinflusst die Flugeigenschaften negativ. Es ist wieder eine nicht unerhebliche Anzahl von Tragseilen erforderlich, die miteinander kollidieren können.

Nach US 2008/0308680 A1 wird ein Sprungfallschirm beschrieben, der konstruktive Merkmale, die ein Gleitfliegen ermöglichen, nicht aufweist.

Bei der Lösung gemäß FR 2 722 471 A1 handelt es sich um eine Konfiguration, bei der die Rippen nach unten mit einer Vielzahl von Bändern abgespannt sind, bei denen die Gefahr von Leinenverdrehern besteht, die letztlich die Sicherheit des Springers gefährden. Konstruktiv wird die Funktion der Sprung- und eines Gleitschirmes angestrebt. Allerdings ist die mögliche Dimensionierung der ein Flügelprofil bildenden Kammern zu gering, um relevanten Vortrieb zu erzeugen.

Aufgabe der Erfindung ist es deshalb, eine solche Gleitschirmkonstruktion zu entwickeln, die bezogen auf eine konstante Absprunghöhe gegenüber anderen Konstruktionen und bei vergleichbarem Wetter eine größere Absprungweite ermöglicht, sodass ein Sprunggleitschirm entsteht.

Die Aufgabe wird gelöst, indem ein Sprunggleitschirm mit den Merkmalen des Anspruches 1 konfiguriert ist. Dieser Aufbau setzt sich vorzugsweise über die gesamte Breite des Sprunggleitschirmes fort, kann aber ebenso nur partiell vorhanden sein.

Dort, wo die Diagonalstreben jeweils am Untersegel enden, befinden sich, wie bei anderen Schirmkonstruktionen auch, die Befestigungspunkte für die Tragseile.

Dabei ist es unerheblich, ob der Sprunggleitschirm, bezogen auf die Draufsicht von oben, eine rechteckige Form aufweist oder ob wenigstens eine der Längsseiten konkav ausgeführt ist.

Die mit ihren Öffnungen der Gleitrichtung zugewandten Kammern sind im Allgemeinen offen.

Eine weitere vorzugsweise Ausgestaltung sieht vor, dass diese Öffnungen teilweise verschlossen sein können. Das hat die Wirkung, dass bei prall gefülltem Flügel eine strömungstechnisch vorteilhaftere Flügelvorderkante entsteht als bei einem reinen Staukammer-Gleitschirm. Grad und Form der Abdekkung sind grundsätzlich im Versuch in Abhängigkeit von allen gewählten Dimensionen und den fertigungstechnisch bedingten Toleranzen zu ermitteln. Eine vorzugsweise Version sieht vor, die Kammern paarweise zu betrachten und die Abdeckung in Form eines gleichschenkligen Dreiecks zu wählen, dessen auf der Hypotenuse errichtete Höhe der Steghöhe entspricht und diese auf einem Steg angeordnet wird, sodass beide nebeneinander liegenden Kammern je jeweils einer Hälfte von einer in einem Stück gefertigten Abdeckung abgedeckt sind.

Vom Sprunggleitschirm nimmt nach unten hin die Konzentration der Tragseile zu. Um diese zu führen, ist über dem Springer ein Slider angeordnet. Dieser kann im wesentlichen die Form eines im wesentlichen ebenen Körpers haben, der ausschließlich die Koordination der Tragseile übernimmt. Eine Vorzugsvariante sieht vor, dass der Slider vorzugsweise und in Kombination damit selbständig flugfähig ausgebildet ist.

Maßzahl für die Güte der Gleitfähigkeit ist die Verhältniszahl aus Flughöhe und Entfernung des Landepunktes vom auf die Erdoberfläche senkrecht nach unten projizierten Absprungpunktes, die sogenannte Gleitzahl. Es hat sich gezeigt, dass sich dieser Wert durch die erfindungsgemäße Konstruktion im Gegensatz zu bisherigen Lösungen weiter verbessert. Durch den vorgeschlagenen inneren gleichmäßigen Aufbau aller Kammern öffnen sich die Kammern und stehen stabiler. Nicht zuletzt führen die konstruktiven Veränderungen dazu, dass durch die vorgeschlagenen Veränderungen im Gegensatz zu Lösungen, die unterschiedliche Kammergestaltungen vorsehen, ein gleichmäßiger Lasteintrag gegeben ist sowie eine Verringerung von Befestigungspunkten für die Tragseile und somit eine Gewichtsverringerung gegeben ist.

Die Erfindung soll nachfolgend an einem Ausführungsbeispiel näher beschrieben werden.

### In der zugehörigen Zeichnung zeigt

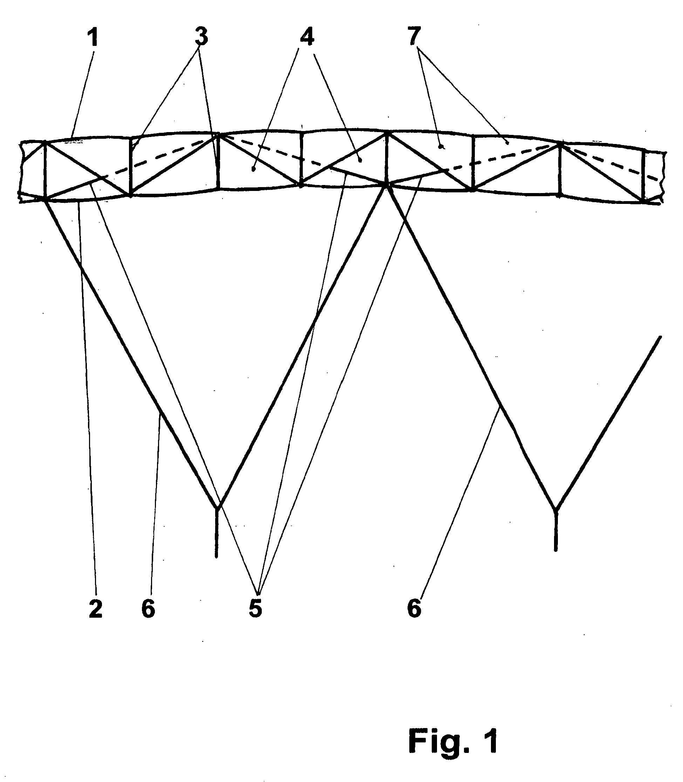

- Fig.1: die Ansicht der in Gleitrichtung vorderen Begrenzung des Sprunggleitschirmes

Zwischen Obersegel 1 und Untersegel 2 eines erfindungsgemäß veränderten Sprunggleitschirmes sind in vertikaler Richtung Stege 3 ausgebildet, sodass Kammern 4 entstehen.

Die Kammern 4 sind so ausgeführt, dass eine quer zur Gleitrichtung verlaufende Diagonalstrebe 5 zwei Kammern 4 durchdringend ausgeführt ist, also aus einer dem Randbereich am nächsten liegenden Ecke der ersten Kammer 4.1 den Steg zwischen der ersten Kammer 4.1 und einer zweiten Kammer 4.2 durchdringend nach oben und der der Durchdringung gegenüberliegenden von Obersegel 1 und Steg 3 gebildeten Ecke führend. In der sich anschließenden dritten Kammer 4.3 ist die Anordnung spiegelbildlich getroffen, sodass die Diagonalstrebe 5 der von Obersegel 1 und Steg der zweiten Kammer 4.2 gebildeten Ecke gegenüberliegend in der von Steg 3 und Kammer 4.3 wieder den Steg 3 zwischen dritter Kammer 4.3 und vierter Kammer 4.4 durchdringend nach unten führend und in der von Steg 3 zwischen vierter und fünfter Kammer 4.5 und dem Untersegel 2 gebildeten Ecke endend ausgeführt ist. Dort schließt sich auf der anderen Seite des weiteren Steges 3 in Kammer 4.5 die Diagonalstrebe 5 wieder nach oben führend an.

Dort, wo die Diagonalstrebe 5 jeweils am Untersegel 2 endet, befinden sich die Befestigungspunkte für die Tragseile 6, die im Weiteren zu einem über dem Springer angeordneten Slider führen und dort koordiniert gebündelt sind.

Dabei ist es grundsätzlich unerheblich, ob die Diagonalstreben 5 flächen- oder bandförmig oder mit kreisrundem Querschnitt ausgeführt sind, wobei die flächenhafte Ausführung jedoch eine gleichmäßige Krafteinleitung gewährleistet. Ihre Anzahl je Kammer 4 ist von der Dimensionierung der Kammern 4 des Sprunggleitschirmes abhängig und wird nach vorliegenden Erfahrungen festgelegt, bezogen auf die konkrete Dimension.

Die mit ihren Öffnungen der Gleitrichtung zugewandten Kammern 4 sind beispielhaft etwa zur Hälfte durch eine Abdeckung 7 verschlossen. Damit entsteht bei prall gefülltem Flügel eine strömungstechnisch vorteilhaftere Flügelvorderkante, die die angestrebte Gleitzahl im Gegensatz zu einem reinen Staukammer-Gleitschirm sehr positiv beeinflusst. Beispielhaft ist für die Abdeckung 7 die Form eines gleichschenkligen Dreiecks gewählt, das mit je einer Hälfte jeweils eine Kammer 4 zur Hälfte abdeckt.

### Bezugszeichen:

- Obersegel: 1
- Untersegel: 2
- Stege: 3
- Kammern: 4
- Diagonalstrebe: 5
- Tragseile: 6
- Abdeckung: 7

## Patentansprüche

1. Sprunggleitschirm, wie er von Springern aus der Luft zum Überwinden größerer Strecken im Gleitflug über Land verwendet wird, der aus Obersegel (1) und Untersegel (2) bestehend ausgeführt ist, in seitlicher Ansicht das Profil eines Flugzeugflügels besitzt und in Gleitrichtung ausgerichtete durch Stege (3) abgeteilte in Gleitrichtung offene und entgegen der Gleitrichtung geschlossen ausgeführte Kammern (4) ausgebildet sind, wobei jeweils mindestens eine quer zur Gleitrichtung angeordnete Diagonalstrebe (5) zwei Kammern (4) durchdringend ausgeführt ist, **dadurch gekennzeichnet, dass** diese Diagonalstrebe (5) an der unteren im Randbereich befindlichen Ecke einer ersten Kammer (4.1) den Steg zwischen der ersten und einer zweiten Kammer (4.2) durchdringend nach oben in die von Obersegel (1) und Steg (3) zwischen der zweiten Kammer (4.2) und sich anschließend in der folgenden dritten Kammer (4.3) gebildeten Ecke und im weiteren anschließend spiegelbildlich in der folgenden dritten Kammer (4.3) beginnend den Steg (3) zur vierten Kammer (4.4) durchdringend nach unten in der von Untersegel (2) und Steg (3) zwischen vierter (4.4) und fünfter Kammer (4.5) gebildeten Ecke der vierten Kammer (4.4) führend ausgebildet ist, wobei sich auf der anderen Seite des Steges (3) zwischen der vierten (4.4) und der fünften Kammer (4.5) die Diagonalstrebe (5) wieder nach oben führend anschließt, bis die Breite von Obersegel (1) und Untersegel (2) besetzt ist.

2. Sprunggleitschirm nach Anspruch 1, **dadurch gekennzeichnet, dass** die beanspruchte Ausführung der Kammern (4) mit Diagonalstreben (5) sich über die gesamte Breite und Tiefe des Sprunggleitschirmes erstreckt und Obersegel (1) und Untersegel (2) eine identische flächenmäßige Ausdehnung aufweisend ausgeführt sind.

3. Sprunggleitschirm nach Anspruch 1 oder 2, **dadurch gekennzeichnet, dass** dort, wo jede Diagonalstrebe (5) jeweils am Untersegel (2) endet, wenigstens ein Befestigungspunkt für ein Tragseil (6) ausgebildet ist.

4. Sprunggleitschirm nach einem der Ansprüche 1 bis 3, **dadurch gekennzeichnet, dass** die der Flugrichtung zugewandten Öffnungen der Kammern (4) durch eine Abdeckung (7) partiell verschlossen sind.

5. Sprunggleitschirm nach Anspruch 4, **dadurch gekennzeichnet, dass** die Abdeckung (7) die Form eines gleichschenkligen Dreiecks aufweist und zwei nebeneinander liegende Kammern (4) je zur Hälfte von der in einem Stück gefertigten Abdeckung (7) abgedeckt sind.

6. Sprunggleitschirm nach einem der Ansprüche 1 bis 5, **dadurch gekennzeichnet, dass** mit zunehmender Konzentration der nach unten führenden Tragseile (6) über dem Springer ein Slider angeordnet ist.

7. Sprunggleitschirm nach Anspruch 6, **dadurch gekennzeichnet, dass** der Slider flugfähig ausgebildet ist.

## Claims

1. Paraglider canopy as used for piloting in gliding flight over relatively large distances over land, which is configured to comprise an upper layer (1) and a lower layer (2) and, as seen in lateral view, has the profile of an aircraft wing, and also has cells (4) which are oriented in the gliding direction, are partitioned off by ribs (3) and are configured to be open in the gliding direction and closed counter to the gliding direction, wherein in each case at least one diagonal rib (5), which is arranged transversely to the gliding direction, is configured to pass through two cells (4), **characterized in that** said diagonal rib (5) is designed so that at the lower, peripheral corner of a first cell (4.1), it passes upwards through the rib between the first cell and a second cell (4.2) into the corner formed by the upper layer (1) and rib (3) between the second cell (4.2) and the following, third cell (4.3) and then, in mirror-inverted fashion, starting in the following, third cell (4.3), it passes downwards through the rib (3) to the fourth cell (4.4) and leads into that corner of the fourth cell (4.4) which is formed by the lower layer (2) and rib (3) between the fourth cell (4.4) and fifth cell (4.5), wherein, on the other side of the rib (3) between the fourth cell (4.4) and the fifth cell (4.5), the diagonal rib (5) follows on again in the upward direction to the extent where the width of the upper layer (1) and lower layer (2) is covered.

2. Paraglider canopy according to Claim 1, **characterized in that** the configuration claimed for the cells (4) with diagonal ribs (5) extends over the entire width and depth of the paraglider canopy, and the upper layer (1) and lower layer (2) are configured to have an identical surface-area extent.

3. Paraglider canopy according to Claim 1 or 2, **characterized in that** at least one fastening point for a supporting line (6) is formed wherever each diagonal rib (5) terminates on the lower layer (2) in each case.

4. Paraglider canopy according to one of Claims 1 to 3, **characterized in that** those openings of the cells (4) which are directed towards the direction of flight are partially closed by a covering (7).

5. Paraglider canopy according to Claim 4, **characterized in that** the covering (7) is in the form of an isosceles triangle, and two adjacent cells (4) are each half-covered by the covering (7), which is produced in a single piece.

6. Paraglider canopy according to one of Claims 1 to 5, **characterized in that**, where the downwardly leading supporting lines (6) increase in concentration, a slider is arranged above the pilot.

7. Paraglider canopy according to Claim 6, **characterized in that** the slider is designed to be airworthy.

## Revendications

1. Parapente de saut, tel qu'il est utilisé pour les pratiquants du parapente pour couvrir de grandes distances en vol planant au-dessus de la terre, qui se compose d'une voile supérieure (1) et d'une voile inférieure (2), qui possède, en vue de côté, le profil d'une aile d'avion, et des alvéoles (4) étant orientées dans la direction de vol, séparées par des cloisons (3), et réalisées sous forme ouverte dans la direction de vol et fermée dans la direction opposée, à chaque fois au moins une entretoise diagonale (5) disposée transversalement à la direction de vol étant réalisée de manière à traverser deux alvéoles (4), **caractérisé en ce que** cette entretoise diagonale (5) est réalisée de manière à s'étendre, au niveau du coin d'une première alvéole (4.1) situé en bas dans la région du bord, en traversant la cloison entre la première et une deuxième alvéole (4.2), vers le haut dans le coin formé par la voile supérieure (1) et la cloison (3) entre la deuxième alvéole (4.2) et la troisième alvéole suivante (4.3) s'y raccordant et en commençant ensuite avec une symétrie spéculaire dans la troisième alvéole suivante (4.3) en traversant la cloison (3) jusqu'à la quatrième alvéole (4.4) vers le bas dans le coin de la quatrième alvéole (4.4) formé par la voile inférieure (2) et la cloison (3) entre la quatrième (4.4) et la cinquième alvéole (4.5), l'entretoise diagonale (5) se raccordant de l'autre côté de la cloison (3) en s'étendant vers le haut entre la quatrième (4.4) et la cinquième alvéole (4.5) jusqu'à ce que la largeur de la voile supérieure (1) et de la voile inférieure (2) soit couverte.

2. Parapente de saut selon la revendication 1, **caractérisé en ce que** la réalisation revendiquée des alvéoles (4) avec des entretoises diagonales (5) s'étend sur toute la largeur et la profondeur du parapente de vol et la voile supérieure (1) et la voile inférieure (2) sont réalisées de manière à présenter une étendue en surface identique.

3. Parapente de saut selon la revendication 1 ou 2, **caractérisé en ce que** là où chaque entretoise diagonale (5) se termine au niveau de la voile inférieure (2), est réalisé au moins un point de fixation pour une suspente (6).

4. Parapente de saut selon l'une quelconque des revendications 1 à 3, **caractérisé en ce que** les ouvertures des alvéoles (4) tournées vers la direction de vol sont partiellement fermées par un recouvrement (7).

5. Parapente de saut selon la revendication 4, **caractérisé en ce que** le recouvrement (7) présente la forme d'un triangle isocèle et deux alvéoles (4) adjacentes sont recouvertes à moitié par le recouvrement (7) fabriqué d'une seule pièce.

6. Parapente de saut selon l'une quelconque des revendications 1 à 5, **caractérisé en ce qu'**avec la concentration croissante des suspentes (6) conduisant vers le bas, on prévoit un coulisseau au-dessus du pratiquant.

7. Parapente de saut selon la revendication 6, **caractérisé en ce que** le coulisseau est réalisé de manière à avoir une capacité à voler.
